# EUROPÄISCHE PATENTSCHRIFT

(11) **EP 3 820 821 B1**
(45) Veröffentlichungstag und Bekanntmachung des Hinweises auf die Patenterteilung: **28.12.2022**
(21) Anmeldenummer: 18746614.9
(22) Anmeldetag: 12.07.2018
(51) Int. Cl.: C02F 1/24, B03D 1/14, B03D 1/24

(54) **VERFAHREN ZUM REINIGEN VON ABWÄSSERN DURCH FLOTATION**
PROCESS FOR PURIFYING WASTE WATER BY FLOTATION
PROCÉDÉ DE PURIFICATION D'EAUX USÉES PAR FLOTTATION

(43) Veröffentlichungstag der Anmeldung: 19.05.2021
(73) Patentinhaber: Damann, Volker, 33165 Lichtenau-Henglarn (DE)
(72) Erfinder: DAMANN, Roland, 33106 Paderborn (DE)
(74) Vertreter: Hauck Patentanwaltspartnerschaft mbB
(86) Internationale Anmeldenummer: PCT/EP2018/068920
(87) Internationale Veröffentlichungsnummer: WO 2020/011359

(56) Entgegenhaltungen:
- DE-A1- 2 925 457
- DE-A1-102008 033 780
- DE-A1-102011 012 782
- DE-B3- 10 228 261
- DE-U1- 29 824 261

## Beschreibung

Die Erfindung betrifft ein Verfahren zum Reinigen von Abwässern durch Flotation.

Bei der Flotation werden Abwässer gereinigt, indem Feststoffe an der Oberfläche von Gasbläschen angelagert und von diesen an die Wasseroberfläche in einem Flotationsbecken aufgeschwemmt werden, wo sie mittels einer Abräumeinrichtung entfernt werden. Bei der Mikroflotation wird durch Anreichern von Wasser unter erhöhtem Druck mit Luft oder einem anderen Gas ein Dispersionswasser gebildet und das Dispersionswasser über eine Entspannungsventileinrichtung dem Abwasser zugeführt. Bei der Entspannung des Dispersionswassers bildet sich idealerweise ein Nebel aus Mikroblasen, wodurch eine besonders große Oberfläche für die Anlagerung von Feststoffteilchen geschaffen wird. Die Flotation mit Hilfe von Dispersionswasser wird auch als DAF (*dissolved airflotation*) bezeichnet.

Bekannte DAF-Anlagen werden nach dem Recyclestromverfahren betrieben. Hierbei wird ein Teil des gereinigten Abwassers durch einen internen Kreislauf gepumpt und mit Flotationsgas, vorzugsweise Luft versetzt, um dann ein Gemisch aus Gasbläschen und Wasser in das Abwasser einzuleiten. Es ist bekannt, das Gemisch aus Gasbläschen und Wasser entweder direkt in das Flotationsbecken oder daneben in eine Zulaufleitung einzuströmen. Bekannte Verfahren erzeugen relativ inhomogene Gasblasengrößenverteilungen Bei der Bewegung der Gasbläschen im Abwasser lagern sich Feststoffteilchen an der Oberfläche der Gasbläschen an. Durch die Turbulenzen werden die erreichten Bindungen zwischen Gasbläschen und Feststoff häufig wieder durch koaleszierende Blasen zerstört und hierdurch die Effizienz des Trennverfahrens gemindert. Durch die Zugabe von bindungsfördernden Chemikalien kann eine stärkere Haftung der Feststoffteilchen an den Gasbläschen erreicht werden. Diese Zugabe ist jedoch mit hohen Betriebskosten und chemikalisch belasteten Schlämmen und daraus resultierenden hohen Entsorgungskosten verbunden. Bei der Flockung oder Flockulation werden kolloidale Feststoffteilchen durch Zugabe von Flockungsmitteln zusammengelagert, damit sie durch die Gasbläschen verstärkt ausgetragen werden können. Der Zusatz von Flockungsmitteln belastet die Abwässer zusätzlich und erhöht die Kosten der Abwasserreinigung.

Die DE 198 35 188 B1 beschreibt ein Verfahren zur Reinigung von Abwässern in einer Flotationsanlage durch Vermischung des Abwasserstroms mit einem Dispersionsstrom bestehend aus in Wasser gelösten Mikrobläschen. Um eine Aufbereitung des Abwassers z.B. hinsichtlich der Trockensubstanzkonzentration in einem dem Flotationsbecken vorgeschalteten Puffer zu vermeiden, wird die Einströmrichtung des Dispersionsstroms in den Abwasserstrom in Abhängigkeit von der Art der Inhaltsstoffe des Abwassers eingestellt. Durch die Veränderung der Einströmrichtung soll unter Berücksichtigung der Stabilität der Flocken aus Trockensubstanzpartikeln eine optimale Durchmischung und Austragung erreicht werden. Sind die Flocken relativ unstabil, soll die Einströmrichtung des Dispersionsstroms in Richtung oder schräg in Richtung des Abwasserstroms eingestellt werden, sodass möglichst wenig Scherkräfte auf die Flocken ausgeübt werden. Sind z.B. durch Zugabe von Flockungsmittel sehr stabile Flocken vorhanden, soll zur Erreichung einer heftigeren und stärkeren Durchmischung die Einströmrichtung auch entgegen oder schräg entgegen der Richtung des Abwasserstroms eingestellt werden. Der Dispersionsstrom wird dem Abwasserstrom über ein Rohrstück einer Zulaufleitung neben ihrer Mündung in das Flotationsbecken zugeführt, gegebenenfalls direkt vor einem Krümmer, der an das Flotationsbecken angeflanscht ist. Für Anwendungsfälle mit besonders instabilen Flocken ist ein Mischbereich mit Ruhezonen vorhanden, in der die Vermischung der Mikrobläschen mit dem Abwasser weniger intensiv ist. DE 102 28 261 B3 bezieht sich auf ein Verfahren und eine Vorrichtung zur Flotation von Abwasser umfassend das Einspeisen eines Dispersionswassers durch ein Entspannungsventil hindurch in ein durch eine Zulaufleitung strömendes Abwasser unter Ausbildung von Mikrobläschen.

Davon ausgehend liegt der Erfindung die Aufgabe zugrunde, ein effektives und weniger aufwendiges Verfahren zum Reinigen von Abwässern durch Flotation zu schaffen.

Die Aufgabe wird durch ein Verfahren mit den Merkmalen von Anspruch 1 gelöst. Vorteilhafte Ausführungsarten des Verfahrens sind in Unteransprüchen angegeben.

Das Verfahren zur Reinigung von Abwässern durch Flotation umfasst die folgenden Schritte:
- Durch Anreichern von Wasser unter erhöhtem Druck mit Luft oder einem anderen Gas wird ein Dispersionswasser gebildet,
- das Dispersionswasser wird durch ein Entspannungsventil hindurch in ein durch eine Zulaufleitung strömendes Abwasser unter Ausbildung von Mikrobläschen eingespeist, wobei die mittlere Geschwindigkeit der Mikrobläschen so bemessen ist, dass sich Kolloide oder andere Feststoffteilchen aus dem Abwasser feinverteilt an der Oberfläche der Mikrobläschen anlagern, und
- das Abwasser mit den darin enthaltenen Mikrobläschen wird in ein Becken eingespeist, in dem die Mikrobläschen mit den daran angelagerten Feststoffteilchen aufschwimmen.

Bei dem erfindungsgemäßen Verfahren werden die Mikrobläschen mit einer mittleren Geschwindigkeit in das Abwasser eingespeist, die so hoch bemessen ist, dass sich Kolloide oder andere Feststoffteilchen feinverteilt an der Oberfläche der Mikrobläschen anlagern. Bei dieser Geschwindigkeit ist die kinetische Energie der Mikrobläschen so hoch, dass darauf auftreffende Feststoffteilchen in die Grenzfläche zwischen den Mikrobläschen und dem angrenzenden Wasser eindringen und hierdurch an der Oberfläche der Mikrobläschen fixiert werden. Bevorzugt dringen Feststoffteilchen in die Grenzfläche ein, die im Abwasser fein verteilt und damit nicht zusammengelagert vorliegen. Infolgedessen lagern sich die Feststoffteilchen auch an der Oberfläche der Mikrobläschen im Wesentlichen feinverteilt und damit nicht zusammengelagert, sondern voneinander getrennt an. Feststoffteilchen, die gegebenenfalls in der Flüssigkeit mit oder ohne Einsatz von Flockungsmitteln zu Flocken zusammengelagert vorliegen, können durch die hohe kinetische Energie der Mikrobläschen in einzelne Feststoffteilchen aufgeteilt werden. Infolgedessen lagern sich auch zusammengelagerte Feststoffteilchen im Wesentlichen feinverteilt an der Oberfläche der Mikrobläschen an. Durch das Eindringen der Feststoffteilchen in die Grenzfläche werden diese hinreichend fest an den Mikrobläschen verankert, sodass diese Bindungen nicht durch Turbulenzen zerstört werden und sie vor dem Aufschwimmen der Gasbläschen an der Wasseroberfläche im Becken nicht freigesetzt werden. Die Mikrobläschen sind so stabil, dass sie im Wesentlichen vor dem Erreichen der Wasseroberfläche nicht zerplatzen oder koaleszieren und die Feststoffteilchen freisetzen. Die Einspeisung der Mikrobläschen in das strömende Abwasser in der Zulaufleitung hat den Vorteil, dass dort die Mikrobläschen zusätzlich zu der hohen Geschwindigkeit eine besonders hohe Konzentration aufweisen, was vorteilhaft für die feinverteilte Anlagerung der Feststoffteilchen an der Oberfläche der Mikrobläschen ist. Die Erzeugung der Mikrobläschen im Abwasser in der Zulaufleitung hat den weiteren Vorteil, dass vorhandene Anlagen in kurzer Zeit ohne größere Baumaßnahmen umgerüstet werden können und dabei die vorhandene technische und hydraulische Infrastruktur beibehalten werden kann. Durch die Erfindung kann somit in besonders nachhaltiger, energiearmer und betriebssicherer Weise eine vorhandene Anlage verbessert werden. Die Erfindung kann aber auch beim Neubau von Anlagen zur Reinigung von Abwässern zum Einsatz kommen.

Kolloide sind kleine Feststoffteilchen, die im Abwasser feinverteilt sind. Die Größe der einzelnen Feststoffteilchen liegt typischerweise im Nanometer- oder Mikrometer-Bereich. Abwässer sind in der Regel polydisperse Systeme, d.h. sie enthalten Feststoffteilchen mit unterschiedlichen Teilchengrößen.

Die Mikrobläschen weisen gemäß einer Ausführungsart der Erfindung mittlere Durchmesser im Bereich von 1 bis 1000 µm auf. Aufgrund ihres geringen Durchmessers haben die Mikrobläschen im Wesentlichen Kugelform. Gemäß einer weiteren Ausführungsart sind die Mikrobläschen monodispers, d.h. sie weisen im Wesentlichen denselben Durchmesser auf. Die Erzeugung von Mikrobläschen durch Einspeisen von Dispersionswasser durch Entspannungsventile in Abwasser ist besonders gut geeignet, im Wesentlichen monodisperse Mikrobläschen zu erzeugen.

Gemäß der Erfindung werden die Mikrobläschen mit einer mittleren Geschwindigkeit von mindestens 0,05 m/s, vorzugsweise von mindestens 0,1 m/s in das Abwasser in der Zulaufleitung eingespeist. Bei der mittleren Geschwindigkeit handelt es sich um die Relativgeschwindigkeit der Mikrobläschen zum strömenden Abwasser in der Zulaufleitung. Bei den genannten Mindestgeschwindigkeiten ist die kinetische Energie der Mikrobläschen so hoch, dass die Feststoffteilchen in die Oberfläche der Mikrobläschen eindringen.

Gemäß einer weiteren Ausführungsart werden die Mikrobläschen aufgrund einer Druckdifferenz zwischen dem Dispersionswasser vor der Einspeisung in das Abwasser und dem Abwasser in der Zulaufleitung auf die mittlere Geschwindigkeit beschleunigt, wobei vorzugsweise die Druckdifferenz 0,5 bis 5 bar, weiterhin vorzugsweise 1 bis 3 bar beträgt. Hierbei wird der aufgrund des Anreicherns mit Gas im Dispersionswasser herrschende Druck für die Beschleunigung der Mikrobläschen auf die zum feinverteilten Anlagern der Feststoffteilchen an ihrer Oberfläche erforderliche Geschwindigkeit genutzt. Dabei liegt das Abwasser in der Regel bei Umgebungsdruck oder einem aufgrund der Höhe des Wasserspiegels im Becken vom Umgebungsdruck abweichenden Druck vor.

Größere Mikrobläschen können bei einer Kollision koaleszieren und hierbei einen erheblichen Teil der anhaftenden Feststoffe verlieren. Gemäß einer weiteren Ausführungsart ist der mittlere Durchmesser der Mikrobläschen so gering bemessen, dass sie stabil sind und nicht beim Zusammentreffen mit anderen Mikrobläschen koaleszieren und hierbei Feststoffe verlieren, wobei der mittlere Durchmesser der Mikrobläschen vorzugsweise im Bereich von 10 bis 70 µm, weiterhin vorzugsweise im Bereich von 20 bis 60 µm, weiterhin vorzugsweise im Bereich von 30 bis 50 µm angesiedelt ist.

Gemäß der Erfindung strömt das Abwasser gemeinsam mit den Mikrobläschen in die Zulaufleitung während einer bestimmten Verweilzeit, die ausreichend ist für die Anlagerung von mindestens der Hälfte, vorzugsweise von mindestens 75 % des Anteils suspendierter Feststoffteilchen des Abwassers an den Mikrobläschen, wobei die Verweilzeit des Gemisches aus Abwasser und Mikrobläschen in der Zulaufleitung bis zur Einspeisung in das Becken mindestens 5 Sekunden, vorzugsweise mindestens 10 Sekunden beträgt. Empirische Untersuchungen haben gezeigt, dass das Ausmaß der Anreicherung der Feststoffteilchen aus dem Abwasser an den Mikrobläschen stark von der Verweilzeit des Gemisches aus Abwasser und Mikrobläschen in der Zulaufleitung abhängt. In der Zulaufleitung herrschen aufgrund der vergleichsweise hohen Konzentration der Mikrobläschen besonders gute Bedingungen für das Anlagern der Feststoffteilchen an den Mikrobläschen. Bei empirischen Untersuchungen wurde bei einer Verweilzeit von mindestens 5 Sekunden eine Anlagerung von mindestens der Hälfte und bei einer Verweilzeit von mindestens 10 Sekunden eine Anlagerung von mindestens 75 % der suspendierten Feststoffteilchen des Abwassers an den Mikrobläschen erreicht. Gemäß einer weiteren Ausführungsart erfolgt die Einspeisung des Dispersionswassers in das Abwasser in der Zulaufleitung in einem Abstand von mindestens 1 m, vorzugsweise in einem Abstand von mindestens 5 m, weiterhin vorzugsweise in einem Abstand von mindestens 10 m vor der Mündung der Zulaufleitung in das Becken. Je nach Strömungsgeschwindigkeit des Abwassers in der Zulaufleitung können mit den angeführten Abständen hinreichend Verweilzeiten für die Anreicherung der gewünschten Anteile der suspendierten Feststoffteilchen an die Mikrobläschen erreicht werden.

Gemäß einer weiteren Ausführungsart wird das Abwasser in einem Abschnitt der Zulaufleitung beschleunigt oder verzögert und wird das Dispersionswasser an der Stelle der maximalen Geschwindigkeit oder der minimalen Geschwindigkeit des Abwassers oder in Strömungsrichtung des Abwassers davor oder dahinter in den Bereich der Beschleunigung oder Verzögerung des Abwassers in der Zulaufleitung eingespeist. Die Einspeisung des Dispersionswassers an der Stelle der maximalen Geschwindigkeit des Abwassers oder kurz davor oder dahinter hat die vorteilhafte Wirkung, dass eine besonders hohe Relativgeschwindigkeit zwischen Mikrobläschen und Abwasser erreicht werden kann, wodurch die Anlagerung feinverteilter Feststoffteilchen an der Oberfläche der Mikrobläschen gefördert wird. Die Einspeisung des Dispersionswassers an einer Stelle verminderter Geschwindigkeit des Abwassers in der Zulaufleitung oder kurz davor oder dahinter hat die vorteilhafte Wirkung, dass die Verweilzeit des Gemischs aus Abwasser und Mikrobläschen in der Zulaufleitung erhöht wird. Die Beschleunigung des Abwassers kann durch einen Abschnitt der Zulaufleitung mit verengtem Querschnitt und die Verzögerung des Abwassers kann durch einen Abschnitt der Zulaufleitung mit erweitertem Querschnitt erreicht werden. Gemäß einer weiteren Ausführungsart wird das Abwasser in einem Abschnitt der Zulaufleitung beschleunigt, an der Stelle der höchsten Geschwindigkeit des Abwassers oder kurz davor oder dahinter das Dispersionswasser in das Abwasser eingespeist und in Strömungsrichtung des Abwassers hinter der Einspeisung des Dispersionswassers das Abwasser verzögert. Bei dieser Ausführungsart wird eine besonders hohe Relativgeschwindigkeit zwischen Mikrobläschen und Abwasser erreicht und eine besonders hohe Verweilzeit des Gemischs aus Abwasser und Mikrobläschen in der Zulaufleitung.

Gemäß einer weiteren Ausführungsart wird das Dispersionswasser in einem bereits bei Errichtung einer Anlage zum Reinigen von Abwässern oder einem nachträglich in die Zulaufleitung eingesetzten Zwischenstück in das Abwasser eingespeist. Gemäß einer weiteren Ausführungsart wird das Verfahren in einer Flotationsanlage durchgeführt. Gemäß einer anderen Ausführungsart wird das Verfahren in einer Kläranlage durchgeführt, wobei das Dispersionswasser in die Zulaufleitung des Klärbeckens eingespeist wird und die Mikrobläschen im Klärbecken mit den angelagerten Feststoffteilchen aufschwimmen, wo sie von einer Räumanlage von der Wasseroberfläche abgetrennt werden können.

Gemäß einer weiteren Ausführungsart wird das Dispersionswasser an mehreren, auf dem Umfang eines Abschnittes der Zulaufleitung verteilten Einspeisesstellen in das Abwasser eingespeist. Hierdurch kann eine besonders hohe und gleichmäßige Konzentration der Mikrobläschen im Abwasser erzielt werden, was vorteilhaft für die Anreicherung der Feststoffteilchen an der Oberfläche der Mikrobläschen ist. Gemäß einer weiteren Ausführungsart werden zusammengelagerte Feststoffteilchen ("Flocken") beim Auftreffen auf die Mikrobläschen voneinander getrennt und feinverteilt an der Oberfläche der Mikrobläschen angelagert. Hierdurch wird eine besonders feste Verankerung der Feststoffteilchen an der Oberfläche der Mikrobläschen erreicht und die Wirksamkeit der Trennung der Feststoffteilchen vom Abwasser erhöht.

Gemäß einer bevorzugten Ausführungsart werden dem Abwasser keine bindungsfördernden Chemikalien und/oder keine Flockungsmittel zugegeben. Hierdurch werden Betriebskosten und chemisch belastete Schlämme und andere Rückstände sowie die daraus resultierenden hohen Entsorgungskosten vermieden.

Eine Anlage zum Reinigen von Abwässern durch Flotation umfasst
- eine Zulaufleitung für Abwasser,
- ein mit der Mündung der Zulaufleitung verbundenes Becken,
- eine Einrichtung zum Erzeugen von Dispersionswasser durch Anreichern von Wasser unter erhöhtem Druck mit Luft oder einem anderen Gas,
- eine mit der Einrichtung zum Erzeugen von Dispersionswasser verbundene und in der Zulaufleitung angeordnete Einspeiseeinrichtung mit einem Entspannungsventil zur Entspannung und Einleitung von Dispersionswasser unter Freisetzung von Mikrobläschen in das Abwasser in der Zulaufleitung,
- wobei die Einspeiseeinrichtung ausgebildet ist, dass die Mikrobläschen mit einer mittleren Geschwindigkeit in das Abwasser in der Zulaufleitung eintreten, sodass sich Kolloide oder andere Feststoffteilchen aus dem Abwasser feinverteilt an der Oberfläche der Mikrobläschen anlagern und im Becken an die Mikrobläschen angelagert aufschwimmen.

Der Anlage kommen die vorteilhaften Wirkungen des erfindungsgemäßen Verfahrens entsprechend zu. Dies gilt auch für die nachfolgend angegebenen Ausführungsarten der Anlage.

Mit der mittleren Geschwindigkeit der Mikrobläschen ist die Relativgeschwindigkeit der Mikrobläschen zum strömenden Abwasser in der Zulaufleitung bezeichnet. Gemäß einer weiteren Ausführungsart ist die Anlage so ausgebildet, dass einer oder mehrere der nachfolgenden Parameter des erfindungsgemäßen Verfahrens eingehalten werden:
- Mittlere Geschwindigkeit der Mikrobläschen von mindestens 0,05 m/s, vorzugsweise von mindestens 0,1 m/s,
- Druckdifferenz zwischen dem Dispersionswasser vor der Einspeisung und dem Abwasser in der Zulaufleitung von 0,5 bis 5 bar, vorzugsweise von 1 bis 3 bar,
- mittlerer Durchmesser der Mikrobläschen im Bereich von 10 bis 70 µm, vorzugsweise im Bereich von 20 bis 60 µm, vorzugsweise im Bereich von 30 bis 50 µm,
- Verweilzeit des Gemisches aus Abwasser und Mikrobläschen in der Zulaufleitung, die ausreichend ist, mindestens die Hälfte, vorzugsweise mindestens 75 % des Anteils suspendierter Feststoffteilchen des Abwassers an den Mikrobläschen anzulagern,
- Verweilzeit des Gemisches von Abwasser und Mikrobläschen in der Zulaufleitung bis zur Einspeisung in das Becken von mindestens 5 Sekunden, vorzugsweise mindestens 10 Sekunden,
- Abstand der Einspeiseeinrichtung von der Zulaufleitung von mindestens 1 m, vorzugsweise von mindestens 5 m, weiterhin vorzugweise von mindestens 10 m.

Gemäß einer weiteren Ausführungsart umfasst die Einspeiseeinrichtung ein Zwischenrohrstück mit mehreren über den Umfang verteilten Einspeiseleitungen und darin angeordneten Entspannungsventilen.

Gemäß einer weiteren Ausführungsart weist das Zwischenrohrstück eine Verengung oder Erweiterung des Querschnittes auf und münden die Einspeiseleitungen an der engsten Stelle oder an der weitesten Stelle des Querschnittes des Zwischenrohrstückes und/oder in Strömungsrichtung des Abwassers davor und/oder in Strömungsrichtung des Abwassers dahinter in das Zwischenrohrstück. Durch Einspeisung der Mikrobläschen in einem Rohr mit verengtem Querschnitt werden besonders günstige Bedingungen für die Anlagerung der Feststoffteilchen an die Mikrobläschen geschaffen. Das Zwischenrohrstück kann insbesondere in der Art einer Venturi-Düse ausgebildet sein. Gemäß einer weiteren Ausführungsart umfasst das Zwischenrohrstück zwei gegeneinander gerichtete Konen, vorzugsweise mit einem diese verbindenden Rohrstück an der engsten Querschnittstelle.

Die Erfindung wird nachfolgend anhand der anliegenden Zeichnungen von Ausführungsbeispielen näher erläutert. In den Zeichnungen zeigen:
- Fig. 1: eine Flotationsanlage in einer schematischen Darstellung;
- Fig. 2A-C: ein Zwischenrohrstück für das Einspeisen von Dispersionswasser in eine Zulaufleitung eines Beckens für die Flotation in Seitenansicht (Fig. 2A), Draufsicht (Fig. 2B) und in einer Perspektivansicht schräg von oben und von der Seite (Fig. 2C);
- Fig. 3: ein anderes Zwischenstück zum Einspeisen von Dispersionswasser in das Abwasser in der Zulaufleitung in einem Längsschnitt,
- Fig. 4: noch ein anderes Zwischenstück zum Einspeisen von Dispersionswasser in das Abwasser in der Zulaufleitung in einem Längsschnitt.

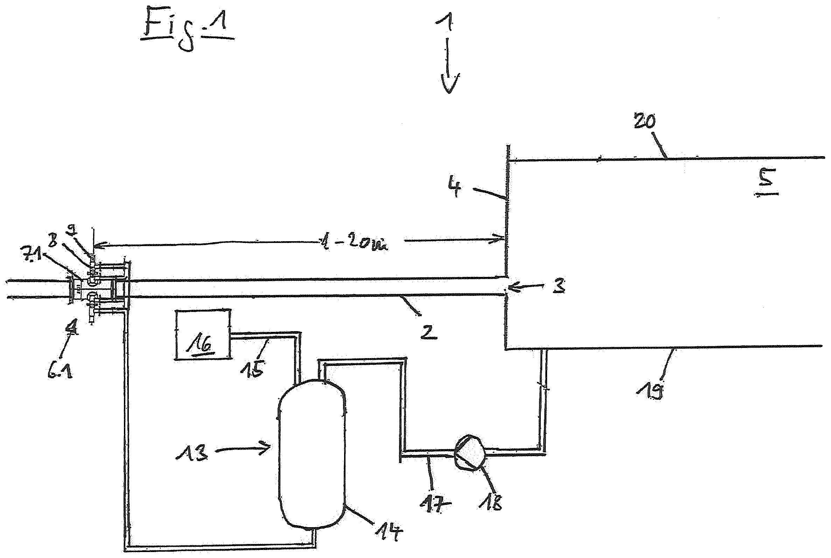

Gemäß Fig. 1 umfasst eine Anlage 1 eine Zulaufleitung 2 für Abwasser, deren Mündung 2 mit einer Wand 4 eines Beckens 5 verbunden ist. In der Zulaufleitung 2 ist eine Einspeiseeinrichtung 6.1 für Dispersionswasser angeordnet. Diese umfasst ein Zwischenrohrstück 7.1 mit mehreren Einspeiseleitungen 8 und darin angeordnete Entspannungsventilen 9.

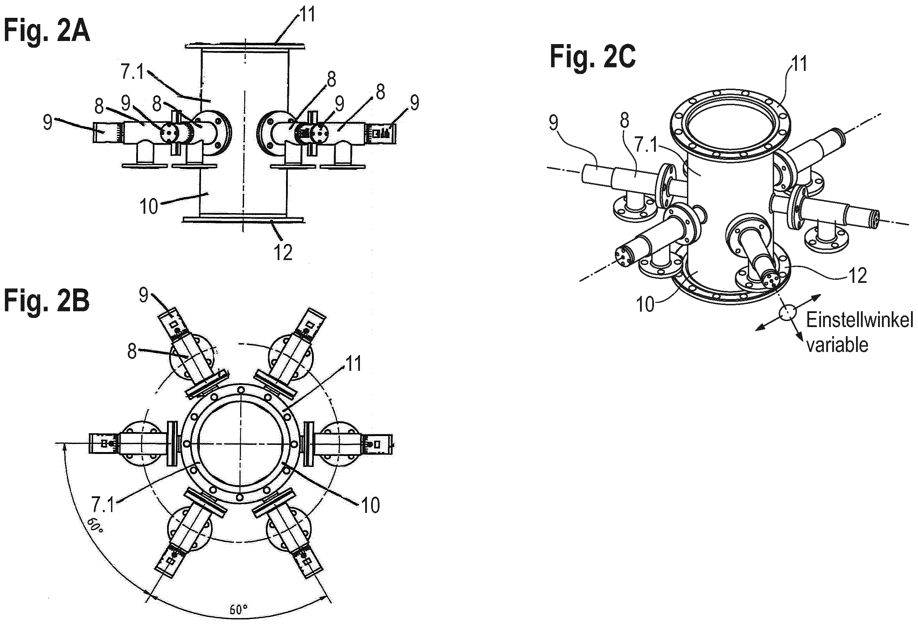

Gemäß Fig. 2 umfasst das Zwischenrohrstück 7.1 ein zylindrisches Rohr 10 mit endseitigen Flanschen 11, 12. Etwa in der Mitte des Rohres 10 sind über seinen Umfang die Einspeiseleitungen 8 gleichmäßig verteilt angeordnet. In jeder Einspeiseleitung 8 befindet sich ein Entspannungsventil 9. Einzelheiten dieser Anordnung können der DE 198 35 188 B1 entnommen werden, wobei die Einspeiseeinrichtung dort zur Einstellung des Dispersionsstroms auf die Art der Inhaltsstoffe des Abwassers vorgesehen ist.

Ferner umfasst gemäß Fig. 1 die Anlage 1 eine Einrichtung 1 zum Erzeugen von Dispersionswasser 13 in Form eines Reaktorbehälters 14, der über eine Gasleitung 15 mit einem Drucklufterzeuger 16 verbunden ist. Der Reaktorbehälter 14 ist über einen Wasserzulauf 17 mit einer darin angeordneten Pumpe 18 an eine Wand 19 des Beckens 5 angeschlossen. Ferner ist die Einrichtung zum Erzeugen von Dispersionswasser 13 mit den Einspeiseleitungen 8 der Einspeisungseinrichtung 6.1 verbunden, um Dispersionswasser in die Einspeiseleitungen 8 einzuspeisen.

Durch die Zulaufleitung 2 wird Abwasser dem Becken 5 zugeführt. In der Einspeiseeinrichtung 6.1 wird Dispersionswasser entspannt und unter Freisetzung von Mikrobläschen in das Abwasser eingeleitet, das die Einspeiseeinrichtung 6.1 durchströmt. Hierbei werden die Mikrobläschen auf eine so hohe Geschwindigkeit gebracht, dass in dem Abwasser enthaltene Kolloide oder andere Feststoffteilchen feinverteilt an der Oberfläche der Mikrobläschen angelagert und dementsprechend fest damit verbunden werden. Die solchermaßen an die Mikrobläschen gebundenen Feststoffteilchen schwimmen im Becken 5 auf und können mittels einer Räumanlage von der Wasseroberfläche 20 abgenommen werden.

Damit möglichst großer Anteil der Feststoffe im Abwasser an die Mikrobläschen angelagert und abgetrennt wird, beträgt der Abstand der Einspeiseeinrichtung 6.1 von der Mündung 3 mindestens 1 bis 20 m. Hierdurch werden Verweilzeiten der Mikrobläschen in der Zulaufleitung 2 von mindestens 5 bis 10 Sekunden erreicht.

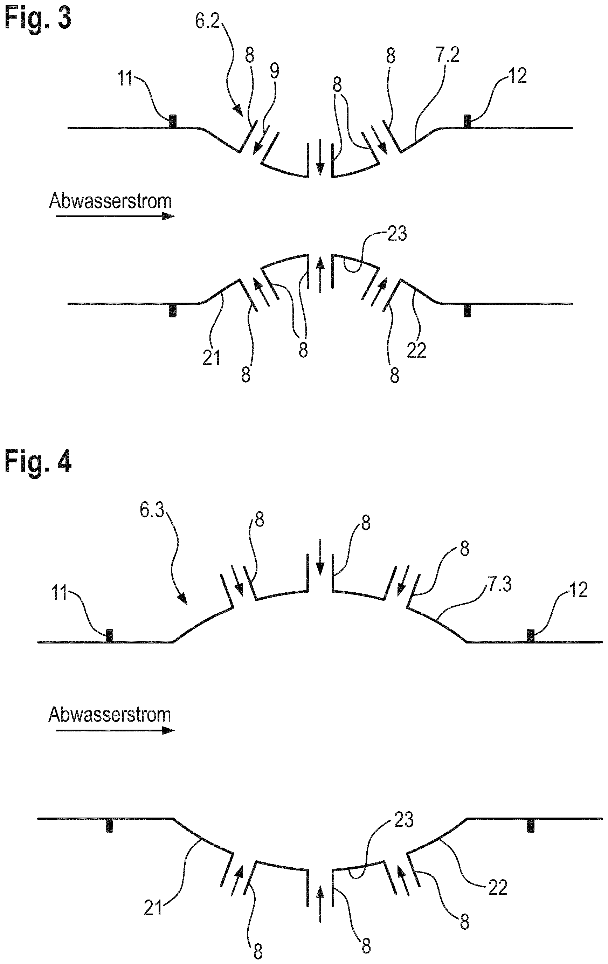

Gemäß Fig. 3 weist eine andere Einspeiseeinrichtung 6.2 zwischen Flanschen 11, 12 ein Zwischenrohrstück 7.2 auf, das nach Art einer Venturi-Düse ausgebildet ist. Zwischen zwei Konen 21, 22, die mit ihren kleinsten Öffnungen aufeinander zugerichtet sind, befindet sich ein kurzes zylindrisches Rohrstück 23, an dem das Zwischenrohrstück 7.2 seinen engsten Querschnitt aufweist. Die Einspeiseleitungen 8 sind auf dem Umfang des Rohrstückes 23 mit dem engsten Querschnitt verteilt sowie in Strömungsrichtung des Abwassers davor und dahinter auf dem Umfang der Konen 21, 22 verteilt angeordnet. Diese Einspeiseeinrichtung 6.2 kann anstatt der Einspeiseeinrichtung 6.1 von Fig. 2 in die Anlage von Fig. 1 eingebaut werden, um die Geschwindigkeit der Mikrobläschen im Abwasser zu erhöhen.

Gemäß Fig. 4 weist noch eine andere Einspeiseeinrichtung 6.3 zwischen Flanschen 11, 12 ein Zwischenrohrstück 7.3 auf, das zwischen den Flanschen 11, 12 seinen größten Querschnitt aufweist. Das Zwischenrohrstück 7.3 hat zwei Konen 21, 22, die mit ihren größten Öffnungen aufeinander zugerichtet sind und über ein zylindrisches Rohrstück 23 miteinander verbunden sind. Im Bereich des zylindrischen Rohrstückes 23 weist das Zwischenrohrstück 7.3 seinen größten Querschnitt auf. Die Einspeiseleitung 8 sind auf dem Umfang des Rohrstückes 23 sowie in Strömungsrichtung des Abwassers davor und dahinter auf dem Umfang der Konen 21, 22 verteilt angeordnet. Die Einspeiseeinrichtung 6.3 kann anstatt der Einspeiseeinrichtung 6.1 von Fig. 2 in der Anlage von Fig. 1 eingebaut werden, um die Verweilzeit des Gemischs aus Mikrobläschen und Abwasser in der Zulaufleitung zu erhöhen.

## Patentansprüche

1. Verfahren zum Reinigen von Abwässern durch Flotation umfassend die folgenden Schritte:
• durch Anreichern von Wasser unter erhöhtem Druck mit Luft oder einem anderen Gas wird ein Dispersionswasser gebildet,
• das Dispersionswasser wird durch ein Entspannungsventil hindurch in ein durch eine Zulaufleitung strömendes Abwasser unter Ausbildung von Mikrobläschen eingespeist, wobei die Mikrobläschen mit einer mittleren Geschwindigkeit von mindestens 0,05 m/s in das Abwasser in der Zulaufleitung eingespeist werden, sodass sich Kolloide oder andere Feststoffteilchen aus dem Abwasser feinverteilt an der Oberfläche der Mikrobläschen anlagern,
• das Abwasser durchströmt gemeinsam mit den Mikrobläschen die Zulaufleitung während einer bestimmten Verweilzeit, die ausreichend ist für die Anlagerung von mindestens der Hälfte des Anteils suspendierter Feststoffteilchen des Abwassers an den Mikrobläschen, wobei die Verweilzeit des Gemisches aus Abwasser und Mikrobläschen in der Zulaufleitung bis zur Einspeisung in das Becken mindestens 5 Sekunden beträgt, und
• das Abwasser mit den damit enthaltenen Mikrobläschen wird in ein Becken eingespeist, in dem die Bläschen mit den daran angelagerten Feststoffteilchen aufschwimmen.

2. Verfahren nach Anspruch 1, bei dem die Mikrobläschen mit einer mittleren Geschwindigkeit von mindestens 0,1 m/s in das Abwasser in der Zulaufleitung eingespeist werden.

3. Verfahren nach Anspruch 1 oder 2, bei dem die Mikrobläschen aufgrund einer Druckdifferenz zwischen dem Dispersionswasser vor der Einspeisung in das Abwasser und dem Abwasser in der Zulaufleitung auf die mittlere Geschwindigkeit beschleunigt werden, wobei vorzugsweise die Druckdifferenz 0,5 bis 5 bar, weiterhin vorzugsweise 1 bis 3 bar beträgt.

4. Verfahren nach einem der Ansprüche 1 bis 3, bei dem der mittlere Durchmesser der Mikrobläschen so gering bemessen ist, dass sie stabil sind und nicht in kleinere Mikrobläschen zerfallen, oder beim Aufeinandertreffen koaleszieren und angelagerte Feststoffteilchen freisetzen, wobei der mittlere Durchmesser der Bläschen im Bereich von 10 bis 70 µm, vorzugsweise im Bereich von 20 bis 60 µm, weiterhin vorzugsweise im Bereich von 30 bis 50 µm angesiedelt ist.

5. Verfahren nach einem der Ansprüche 1 bis 4, bei dem das Abwasser gemeinsam mit den Mikrobläschen die Zulaufleitung während einer bestimmten Verweilzeit durchströmt, die ausreichend ist für die Anlagerung von mindestens 75 % des Anteils suspendierter Feststoffteilchen des Abwassers an den Mikrobläschen, wobei die Verweilzeit des Gemisches aus Abwasser und Mikrobläschen in der Zulaufleitung bis zur Einspeisung in das Becken mindestens 10 Sekunden beträgt.

6. Verfahren nach einem der Ansprüche 1 bis 5, bei dem die Einspeisung des Dispersionswassers in das Abwasser in der Zulaufleitung in einem Abstand von mindestens 1 m, vorzugsweise in einem Abstand von mindestens 5 m, weiterhin vorzugsweise in einem Abstand von mindestens 10 m vor der Mündung der Zulaufleitung in das Becken erfolgt.

7. Verfahren nach einem der Ansprüche 1 bis 6, bei dem das Dispersionswasser in einem bei Errichtung einer Anlage zum Reinigen von Abwässern oder nachträglich in die Zulaufleitung eingesetzten Zwischenstück in das Abwasser eingespeist wird.

8. Verfahren nach einem der Ansprüche 1 bis 7, bei dem das Dispersionswasser an mehreren auf dem Umfang eines Abschnittes der Zulaufleitung verteilten Einspeisestellen in das Abwasser eingespeist wird.

9. Verfahren nach einem der Ansprüche 1 bis 8, bei dem zusammengelagerte Feststoffteilchen beim Auftreffen auf die Mikrobläschen voneinander getrennt und feinverteilt an der Oberfläche der Mikrobläschen angelagert werden.

10. Verfahren nach einem der Ansprüche 1 bis 9, bei dem dem Abwasser keine bindungsfördernden Chemikalien und/oder keine Flockungsmittel zugegeben werden.

## Claims

1. A method for purifying waste water by flotation, comprising the following steps:
• a dispersion water is formed by enriching water with air or another gas under increased pressure,
• the dispersion water is fed through an expansion valve into waste water flowing through an intake line, forming microbubbles, wherein the microbubbles are fed into the waste water in the intake line at an average speed of at least 0.05 m/s so that colloids or other solid particles from the waste water accumulate finely distributed on the surface of the microbubbles,
• the waste water together with the microbubbles flows through the intake line for a specific dwell time, which is sufficient for at least half of the amount of suspended solid particles in the waste water to accumulate on the microbubbles, wherein the dwell time of the mixture of waste water and microbubbles in the intake line before it is fed into the basin is at least 5 seconds, and
• the waste water with the microbubbles contained therein is fed into a basin in which the bubbles with the solid particles accumulated thereon float.

2. The method according to claim 1, in which the microbubbles are fed into the waste water in the intake line with an average speed of at least 0.1 m/s.

3. The method according to claim 1 or 2, in which the microbubbles are accelerated to the average speed due to a pressure difference between the dispersion water before being fed into the waste water and the waste water in the intake line, wherein preferably the pressure different is 0.5 to 5 bar, further preferably 1 to 3 bar.

4. The method according to one of claims 1 to 3, in which the average diameter of the microbubbles is so small that they are stable and do not disintegrate into smaller microbubbles, or coalesce upon hitting each other and release accumulated solid particles, wherein the average diameter of the bubbles is in the range from 10 to 70 µm, preferably in the range from 20 to 60 µm, further preferably in the range from 30 to 50 µm.

5. The method according to one of claims 1 to 4, in which the waste water together with the microbubbles flows through the intake line for a specific dwell time which is sufficient for at least 75% of the amount of suspended solid particles in the waste water to accumulate on the microbubbles, wherein the dwell time of the mixture of waste water and microbubbles in the intake line before it is fed into the basin is at least 10 seconds.

6. The method according to one of claims 1 to 5, in which the dispersion water is fed into the waste water in the intake line at a distance of at least 1 m, preferably at a distance of at least 5 m, further preferably at a distance of at least 10 m before the opening of the intake line into the basin.

7. The method according to one of claims 1 to 6, in which the dispersion water is fed into the waste water in an intermediate piece inserted into the intake line when the system for purifying waste water was built or subsequently.

8. The method according to one of claims 1 to 7, in which the dispersion water is fed into the waste water at multiple feed points distributed on the circumference of a portion of the intake line.

9. The method according to one of claims 1 to 8, in which congregated solid particles, upon hitting the microbubbles, accumulate finely distributed and separately from one another on the surface of the microbubbles.

10. The method according to one of claims 1 to 9, in which no bond-promoting chemicals and/or no flocculants are added to the waste water.

## Revendications

1. Procédé de purification d'eaux usées par flottation, comportant les étapes suivantes :
une eau de dispersion est formée par enrichissement d'eau sous une pression élevée avec de l'air ou un autre gaz,
l'eau de dispersion est introduite dans une eau usée s'écoulant à travers une conduite d'arrivée par le biais d'une soupape de détente en formant des microbulles, les microbulles étant introduites avec une vitesse moyenne d'au moins 0,05 m/s dans l'eau usée dans la conduite d'arrivée, de sorte que des colloïdes ou d'autres particules solides issus de l'eau usée s'accumulent de manière finement répartie à la surface des microbulles,
l'eau usée traverse la conduite d'arrivée conjointement avec les microbulles pendant un certain temps de séjour, lequel est suffisant pour l'accumulation d'au moins la moitié de la part de particules solides en suspension de l'eau usée sur les microbulles, le temps de séjour du mélange composé d'eau usée et de microbulles dans la conduite d'arrivée jusqu'à l'introduction dans le bassin s'élevant à au moins 5 secondes, et
l'eau usée avec les microbulles contenues dans celle-ci est introduite dans un bassin, dans lequel flottent les bulles avec les particules solides accumulées dessus.

2. Procédé selon la revendication 1, dans lequel les microbulles sont introduites dans l'eau usée dans la conduite d'arrivée avec une vitesse moyenne d'au moins 0,1 m/s.

3. Procédé selon la revendication 1 ou 2, dans lequel les microbulles sont accélérées à la vitesse moyenne du fait d'une différence de pression entre l'eau de dispersion avant l'introduction dans l'eau usée et l'eau usée dans la conduite d'arrivée, la différence de pression étant de préférence comprise entre 0,5 et 5 bar, de façon également préférentielle entre 1 et 3 bar.

4. Procédé selon l'une des revendications 1 à 3, dans lequel le diamètre moyen des microbulles est si réduit que celles-ci sont stables et ne se décomposent pas en microbulles plus petites, ou ne s'unissent pas par coalescence et ne libèrent pas de particules solides accumulées, le diamètre moyen des bulles mesurant entre 10 et 70 µm, de préférence entre 20 et 60 µm, de façon également préférentielle entre 30 et 50 µm.

5. Procédé selon l'une des revendications 1 à 4, dans lequel l'eau usée s'écoule à travers la conduite d'arrivée conjointement avec les microbulles pendant un certain temps de séjour, lequel est suffisant pour l'accumulation d'au moins 75% de la part de particules solides en suspension de l'eau usée sur les microbulles, le temps de séjour du mélange composé d'eau usée et de microbulles dans la conduite d'arrivée jusqu'à l'introduction dans le bassin s'élevant à au moins 10 secondes.

6. Procédé selon l'une des revendications 1 à 5, dans lequel l'introduction de l'eau de dispersion dans l'eau usée dans la conduite d'arrivée est réalisée à une distance d'au moins 1 m, de préférence à une distance d'au moins 5 m, de façon également préférentielle à un distance d'au moins 10 m avant l'embouchure de la conduite d'arrivée dans le bassin.

7. Procédé selon l'une des revendications 1 à 6, dans lequel l'eau de dispersion est introduite dans l'eau usée dans une pièce intermédiaire insérée dans la conduite d'arrivée lors de la construction d'une installation de purification d'eaux usées ou ultérieurement.

8. Procédé selon l'une des revendications 1 à 7, dans lequel l'eau de dispersion est introduite dans l'eau usée à plusieurs points d'introduction répartis sur la périphérie d'une section de la conduite d'arrivée.

9. Procédé selon l'une des revendications 1 à 8, dans lequel des particules solides associées se séparent les unes des autres lors de l'impact sur les microbulles et sont accumulées de manière finement répartie à la surface des microbulles.

10. Procédé selon l'une des revendications 1 à 9, dans lequel aucun produit chimique favorisant la liaison et/ou floculant n'est ajouté à l'eau usée.
